# FASCICULE DE BREVET EUROPEEN

(11) **EP 0 709 768 B1**
(45) Date de publication et mention de la délivrance du brevet: **15.09.1999**
(21) Numéro de dépôt: 95402357.8
(22) Date de dépôt: 23.10.1995
(51) Int. Cl.: G06F 9/38

(54) **Dispositif d'exécution d'un programme d'instructions**
Vorrichtung zur Ausführung von Befehlsprogrammen
Apparatus to execute instruction programs

(30) Priorité: 25.10.1994 FR 9412741
(43) Date de publication de la demande: 01.05.1996
(73) Titulaire: C.S.E.M. CENTRE SUISSE D'ELECTRONIQUE ET DE MICROTECHNIQUE SA, 2007 Neuchâtel (CH)
(72) Inventeur: Piguet, Christian, CH-2000 Neuchâtel (CH); Perotto, Jean-Félix, CH-2013 Colombier (CH); Marchal, Pierre, CH-1007 Lausanne (CH)
(74) Mandataire: Aron, Georges

(56) Documents cités:
- EP-A- 0 315 995
- EP-A- 0 570 164
- IBM JOURNAL OF RESEARCH AND DEVELOPMENT, vol. 34, no. 1, Janvier 1990, pages 37-58, XP000128179 GROHOSKI G F: "MACHINE ORGANIZATION OF THE IBM RISC SYSTEM/6000 PROCESSOR"
- IBM TECHNICAL DISCLOSURE BULLETIN, vol. 32, no. 2, Juillet 1989, pages 62-64, XP000033343 "CACHE ORGANIZATION TO MAXIMIZE FETCH BANDWIDTH"
- COMPUTER ARCHITECTURE NEWS, vol. 19, no. 4, Juin 1991, pages 14-29, XP000228930 KUGA M ET AL: "DSNS(DYNAMICALLY-HAZARD-RESOLVED, STATICALLY-CODE-SCHEDULED, NONUNIFORM SUPERSCALAR): YET ANOTHER SUPERSCALAR PROCESSOR ARCHITECTURE"

## Description

La présente invention est relative à un dispositif d'exécution d'un programme compose d'instructions et, plus particulièrement, à un tel dispositif comprenant des moyens de stockage de ces instructions, des moyens de lecture de m instructions en parallèle, une unité de traitement de ces instructions et des moyens pour fournir successivement les instructions lues du programme à l'unité de traitement.

Les dispositifs permettant la lecture de m instructions en parallèle sont particulièrement utiles lorsque, soit les moyens de stockage utilisés sont moins rapides que l'unité de traitement, soit il est souhaitable, pour des raisons de consommation, de faire travailler ces moyens de stockage à une fréquence inférieure à celle de ladite unité de traitement. Les moyens de stockage peuvent consister, soit en N(N ≥ m) mémoires en parallèle (dans lesquelles sont distribuées en succession les m instructions), qui sont adressées et lues quasi simultanément en un cycle mémoire (temps requis pour lire les N mémoires), soit en une seule mémoire dont chaque ligne contient N instructions successives, les m instructions pouvant être lues simultanément en un cycle mémoire. Il est clair que, par rapport à des moyens de stockage ne délivrant qu'une instruction par cycle mémoire, les dispositifs mentionnés ci-dessus peuvent travailler à une fréquence m fois plus faible ; ce qui permet de réduire d'autant leur consommation.

Pour des raisons pratiques, m est souvent choisi égal à 2ⁿ et on considérera dans la suite de la description que tel est le cas sans pour autant se limiter aux exemples décrits.

La lecture en parallèle de moyens de mémoire entre lesquels sont distribuées les instructions d'un programme ne soulève pas de problème particulier lorsque celles-ci ne comprennent pas d'instruction de branchement. Par contre, la gestion de ces moyens devient difficile dans le cas contraire, du fait qu'une instruction de branchement exige couramment un saut à l'adresse de l'instruction à exécuter (instruction cible) qui est située dans une mémoire (ou zone de mémoire) autre que celle qui est normalement activée après cette même instruction de branchement. Suivant la technique actuelle, de tels sauts s'accompagnent de phases à vide retardant l'exécution du programme.

Le document d'antériorité suivant résume diverses techniques visant à réduire les retards causés par les instructions de branchement : IBM JOURNAL OF RESEARCH AND DEVELOPMENT, vol. 34, no. 1, Janvier 1990, pages 37-58, GROHOSKI G F: "MACHINE ORGANIZATION OF THE IBM RISC SYSTEM/6000 PROCESSOR".

La présente invention a précisément pour but de réaliser un dispositif d'exécution d'un programme de A instructions réparties entre plusieurs mémoires ou zones de mémoire lues en parallèle, comprenant des moyens propres à délivrer à une unité de traitement d'informations les instructions successives d'un programme comprenant des branchements, d'une manière efficace et propre à minimiser le nombre de phases à vide observées lors des branchements.

On atteint ces buts de l'invention, ainsi que d'autres qui apparaîtront à la lecture de la description qui va suivre, avec un dispositif d'exécution d'un programme compose d'instructions comprenant des premiers moyens de stockage du programme aptes à délivrer en un cycle mémoire 2ⁿ instructions en parallèle, une unité de traitement des instructions et des deuxièmes moyens pour fournir des instructions successives à l'unité de traitement, caractérisé en ce que lesdits deuxièmes moyens comprennent une unité de gestion sensible à une instruction de branchement appartenant auxdites 2ⁿ instructions délivrées par lesdits premiers moyens et capable d'activer lesdits premiers moyens de manière que l'instruction cible désignée par ladite instruction de branchement soit la première des 2ⁿ instructions suivantes délivrées par lesdits premiers moyens.

Les n bits (LSB) les moins significatifs de l'adresse, de M bits, de l'instruction cible identifient la mémoire ou la zone de mémoire contenant cette instruction cible alors que les (M-n) bits (MSB) les plus significatifs identifient l'une de 2^{M-n} lignes de 2ⁿ adresses prises chacune dans une des 2ⁿ mémoires. L'unité de gestion comprend un automate sensible aux n bits (LSB) de l'adresse de l'instruction cible pour adresser la ou les mémoires de telle sorte que cette instruction cible soit la première des 2ⁿ instructions lues suivantes.

Ainsi, l'automate du dispositif suivant l'invention assure une exécution rapide des instructions lors d'un branchement, propre à minimiser le nombre de phases à vide alors observées, comme on le verra dans la suite. Un décodeur d'instructions, sensible à une instruction de branchement extraite d'une mémoire fournit à l'automate de commande un signal indiquant qu'un branchement doit être exécuté.

Suivant un premier mode de réalisation du dispositif suivant l'invention, les moyens de stockage sont constitués de 2ⁿ mémoires et un compteur de programme est associé à chaque mémoire pour être chargé avec les (M-n) bits (MSB) d'une adresse, le chargement de l'adresse étant commandé par un signal d'horloge à la fréquence F/2ⁿ, où F représente la fréquence d'horloge de l'unité de traitement, formé et fourni par l'automate de commande.

Suivant un deuxième mode de réalisation du dispositif suivant l'invention, un compteur de programme unique commande en parallèle les 2ⁿ mémoires, ce compteur étant chargé avec les (M-n) bits (MSB) d'une adresse par un signal d'horloge à la fréquence F/2ⁿ émis par l'automate de commande, le dispositif comprenant en outre 2ⁿ registres d'instructions placés chacun à la sortie d'une des mémoires et commandés en parallèle par un signal d'horloge émis par l'automate de commande.

Suivant un autre mode de réalisation du dispositif selon l'invention, conçu pour l'exécution de programmes contenant des instructions d'appel à des sous-programmes et de retour dans le programme, une pile de registres et un pointeur de pile sont prévus pour la mémorisation temporaire des adresses des sous-programmes appelés et des adresses de retour dans le programme.

D'autres caractéristiques et avantages de la présente invention apparaîtront à la lecture de la description qui va suivre et à l'examen du dessin annexé dans lequel :
- les figures 1A à 1C illustrent l'organisation générale du dispositif suivant l'invention,
- la figure 2 est un schéma d'un premier mode de réalisation du dispositif suivant l'invention,
- les figures 3A, 3B sont des chronogrammes expliquant le fonctionnement du dispositif de la figure 2,
- les figures 4A à 4C représentent la structure d'un automate de commande incorporé au dispositif de la figure 2,
- la figure 5 est un schéma d'un deuxième mode de réalisation du dispositif suivant l'invention,
- les figures 6A et 6B sont des chronogrammes expliquant le fonctionnement du dispositif de la figure 5,
- les figures 7A et 7B représentent la structure d'un automate de commande incorporé au dispositif de la figure 5,
- la figure 8 représente une autre variante de l'invention selon laquelle il est prévu une fenêtre déplaçable pour sélectionner les 2ⁿ instructions,
- la figure 9 représente la variante de la figure 8 dans le cas où n est égal à 1,
- la figure 10 représente encore une autre variante de l'invention comprenant 2ⁿ mémoires et un seul compteur de programme,
- la figure 11 représente la variante de la figure 10 dans le cas où n est égal à 1,
- la figure 12 montre les moyens de commande associés au dispositif de la figure 8,
- la figure 13 est un chronogramme associé à la figure 12,
- les figures 14A à 14C illustrent un autre mode de réalisation du dispositif suivant l'invention, et
- la figure 15 représente schématiquement une variante du dispositif des figures 14A à 14C.

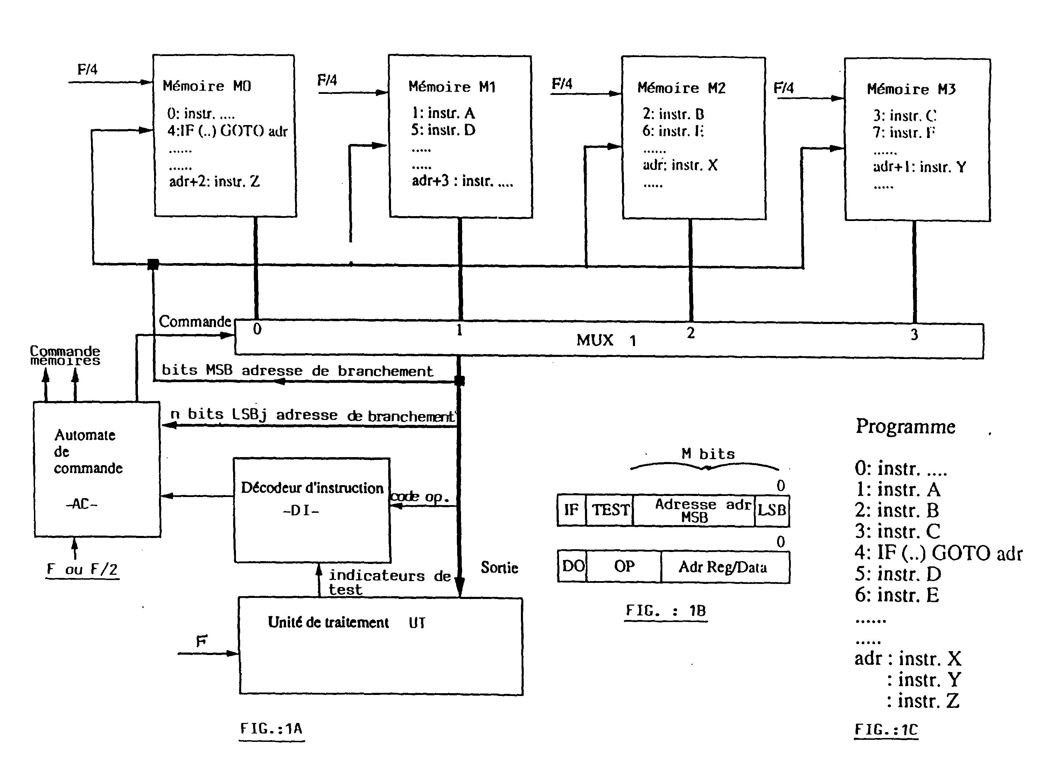

Sur la figure 1 il apparaît que le dispositif selon l'invention comprend des moyens de stockage d'instructions constitués par une pluralité de mémoires Mi (i = 0 à 3) entre lesquelles sont distribuées les A instructions d'un programme donné à la figure 1C. Les instructions successives du programme sont réparties cycliquement dans les mémoires M0, M1, M2, M3 comme cela apparaît à la figure 1. L'instruction référencée 4 dans le programme est une instruction de branchement conditionnel : IF(...) GOTO adr, exprimée dans un langage mnémonique bien connu de l'informaticien. Comme représenté sur la figure 1A, cette instruction est contenue, à titre d'exemple seulement, dans la mémoire MO. Le format de cette instruction est donné à la figure 1B de même que celui d'une instruction courante.

En distribuant les instructions du programme entre 2ⁿ mémoires, il est possible d'utiliser pour chacune une fréquence d'horloge ou de travail réduite par rapport à la fréquence F qu'il faudrait utiliser si toutes les instructions étaient enregistrées successivement dans une mémoire unique. En utilisant quatre mémoires (n = 2), la fréquence de travail de chacune peut ainsi tomber à F/4 ce qui est avantageux comme on l'a vu plus haut, quand ces mémoires doivent être alimentées en basse tension.

Grâce à un multiplexeur MUX 1 commandé à la fréquence F, les instructions du programme sont néanmoins fournies à une unité de traitement UT de ces instructions, à la fréquence F, ce qui permet à cette unité de fonctionner à cette même fréquence. La vitesse d'exécution du programme n'est donc pas pénalisée par l'abaissement de la fréquence de travail des mémoires.

Dans ce contexte, la présente invention a précisément pour but d'assurer l'exécution d'un programme contenant une ou plusieurs instructions de branchement, malgré l'obstacle que constitue la distribution des instructions du programme entre plusieurs mémoires ou, suivant une disposition équivalente, entre plusieurs zones différentes d'une même mémoire.

Pour ce but, le dispositif suivant l'invention comprend une unité de gestion constituée par un décodeur d'instructions DI et un automate de commande AC, le décodeur étant sensible à une instruction de branchement conditionnel délivrée par la sortie du multiplexeur MUX 1 pour reconnaître une telle instruction et fournir à l'automate AC un signal validant le branchement de manière que l'automate commande l'extraction de l'instruction se trouvant à l'adresse adr donnée dans l'instruction de branchement.

C'est ainsi que, suivant l'invention, les M bits de l'adresse adr de branchement (voir figure 1B) sont divisés en n bits (LSB) les moins significatifs identifiant la mémoire contenant l'instruction cible à l'adresse de branchement et en (M-n) bits (MSB) les plus significatifs identifiant l'une de 2^{M-n} lignes de 2ⁿ adresses prises chacune dans une des 2ⁿ mémoires.

Comme cela apparaît sur la figure 1A, ces deux informations permettent de déterminer de manière univoque la mémoire et/ou l'emplacement de mémoire où se trouve l'instruction cible, cette adresse étant identifiée par la ligne (horizontale sur la figure 1A) sur laquelle elle se trouve et par la "colonne" (ou mémoire) qui la contient. Comme cela apparaît sur cette figure, l'automate AC est alors alimenté par les n bits (LSB) de l'adresse pour activer la mémoire contenant ladite adresse et par un signal délivré par le décodeur d'instruction DI, pour commander l'extraction de l'instruction se trouvant à l'adresse donnée dans l'instruction de branchement.

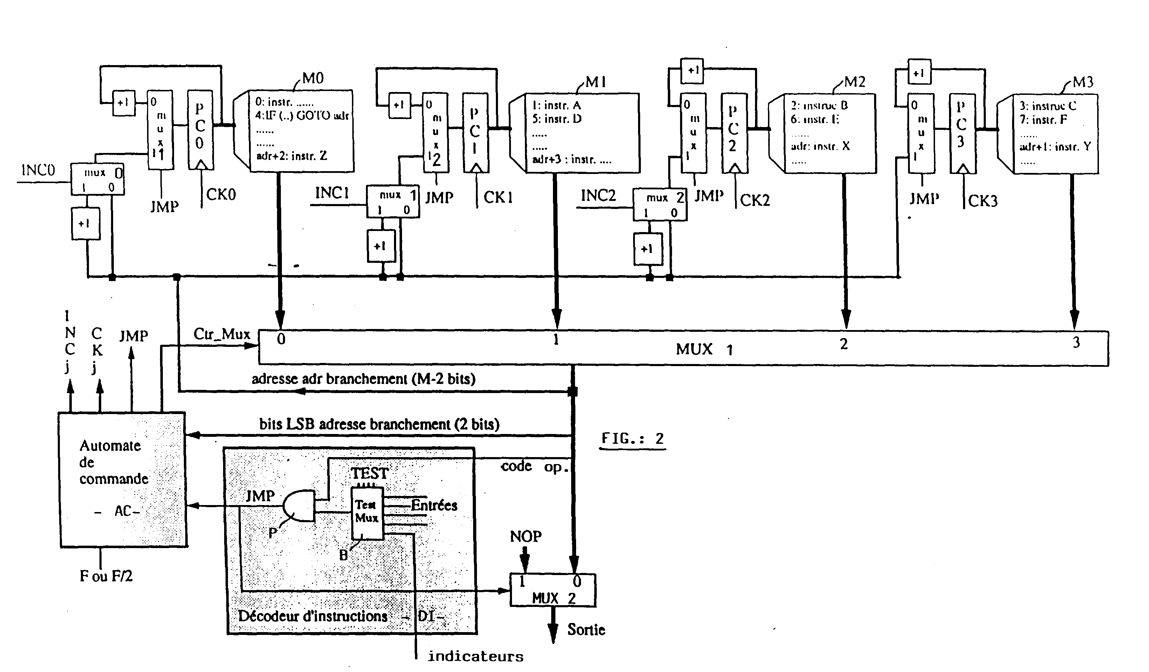

On se réfère maintenant à la figure 2 pour décrire en plus de détail la structure et le fonctionnement d'un premier mode de réalisation du dispositif suivant l'invention, et, plus particulièrement, du décodeur d'instructions et de l'automate de commande incorporés à ce dispositif. Sur la figure 2 et les suivantes, des références identiques à des références déjà utilisées sur les figures précédentes repèrent des organes identiques ou similaires.

On retrouve sur la figure 2 les quatre (n = 2) mémoires Mi, le multiplexeur MUX 1, le décodeur d'instructions DI et l'automate de commande AC du dispositif de la figure 1. La logique du décodeur est constituée par un bloc B de sélection de la variable de test éventuellement présente dans une instruction de branchement, la sortie de ce bloc B étant combinée à la présence du code opératoire d'une telle instruction dans une porte P qui délivre à l'automate de commande un signal JMP de saut représentatif de la validation de la condition de branchement. Ce signal JMP commande aussi un deuxième multiplexeur MUX 2 placé en aval du premier multiplexeur MUX 1. En cas de saut, ce sont des codes NOP de "non opération" induisant des phases à vide qui sont reçus par l'unité de traitement UT (non représentée) connectée à la sortie du multiplexeur MUX 2, en lieu et place des instructions normalement délivrées par le multiplexeur MUX 1. Ces codes NOP bloquent l'unité de traitement pendant l'exécution d'un branchement.

Pour l'extraction de l'instruction contenue à l'adresse de branchement indiquée dans l'instruction de branchement, l'automate de commande élabore des signaux d'horloge CKj de commande de charge d'une pluralité de compteurs de programme PCj correspondants et des signaux INCj de commande de l'incrémentation de ces compteurs PCj. Cette incrémentation est commandée par l'intermédiaire de multiplexeurs muj à deux entrées, l'une assurant une incrémentation normale du compteur en l'absence d'instruction de branchement alors que l'autre s'y substitue en cas de saut (présence du signal JMP), comme on le verra plus loin. On remarquera que les signaux INCj (j = 0, 1, 2) commandent des multiplexeurs muxj (j = 0, 1, 2) à deux entrées dont l'une est alimentée par les (M-2) bits MSB d'une éventuelle adresse de branchement et l'autre est l'adresse précédente incrémentée d'une unité.

Chacune des mémoires Mi peut contenir jusqu'à A/4 instructions du programme à exécuter, avec les instructions d'adresses j, j+1, j+2 et j+3 respectivement dans une même ligne (horizontale sur la figure 2) des positions de mémoire des mémoires M0, M1, M2 et M3. Les compteurs de programme PCi sont chargés, sous la commande des signaux CKi, avec les (M-2) bits MSB d'une adresse, qui définissent la ligne d'instructions contenant cette adresse. Les deux bits LSB les moins significatifs permettent à l'automate AC de commander le multiplexeur MUX 1 et donc de sélectionner celle des quatre instructions de la ligne qui doit être fournie à l'unité de traitement UT.

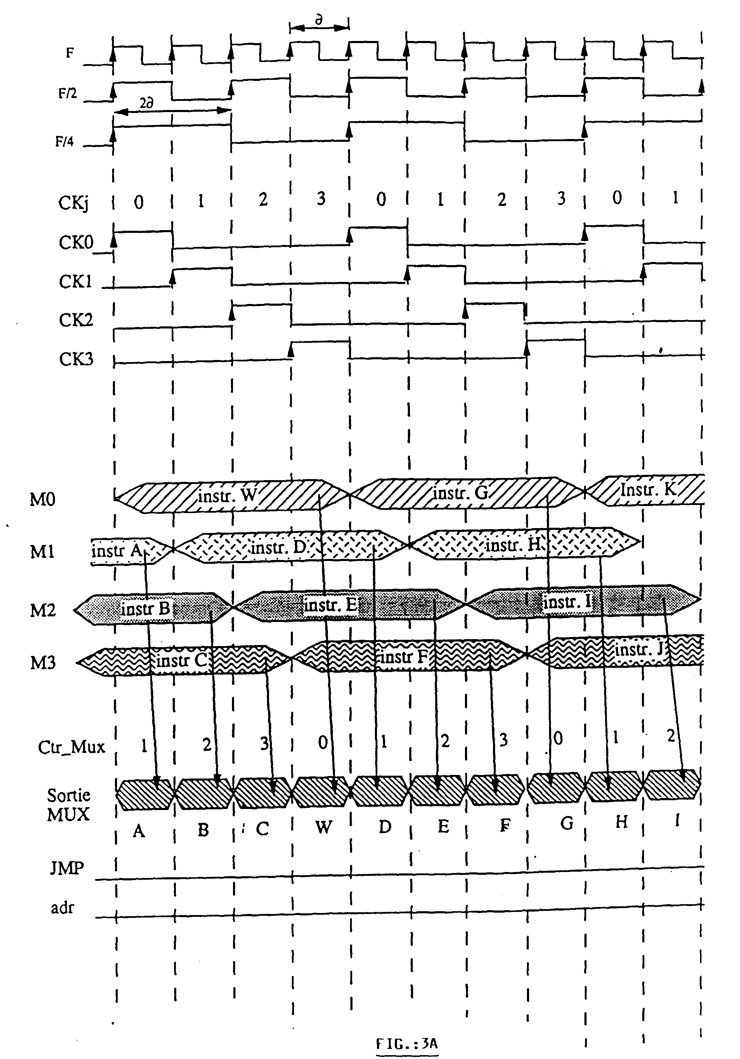

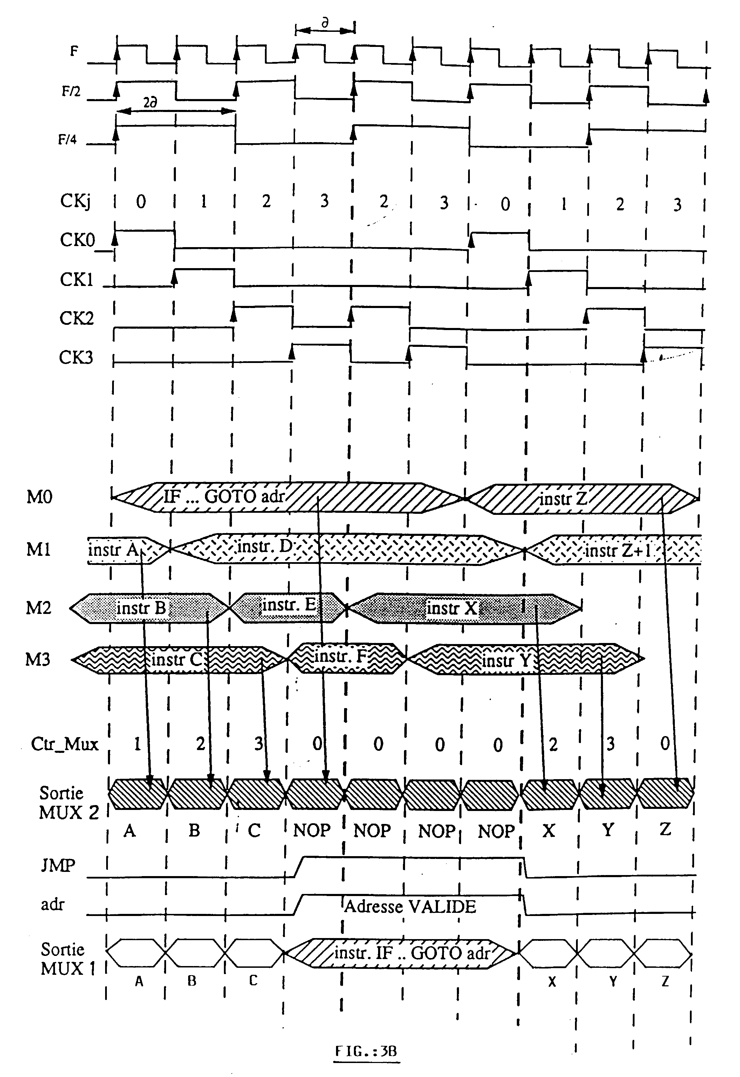

On se réfère maintenant aux chronogrammes des figures 3A et 3B pour expliquer le fonctionnement du dispositif de la figure 2. Le chronogramme de la figure 3A explique le fonctionnement du dispositif dans le cas de l'exécution d'un programme d'instructions A, B, C ... I, J, K ... dépourvu d'instructions de branchement. On a fait apparaître la fréquence F d'horloge de synchronisation de périodes 6 et les fréquences sous-multiples F/2 et F/4, cette dernière rythmant le travail des mémoires Mi, sous la commande des signaux d'horloge CK0 à CK3 dont la combinaison des niveaux logiques correspond aux valeurs indiquées ligne CKj. On remarquera que les signaux CKj sont décalés dans le temps les uns par rapport aux autres et que, par conséquent, les compteurs de programme PCi ne sont pas chargés simultanément.

Les temps d'accès aux instructions contenues dans les mémoires M0 à M3 sont aussi indiqués sur les lignes ainsi référencées. Sur le chronogramme de la figure 3A il apparaît qu'il faut 3 cycles de l'horloge de fréquence F pour transférer une instruction d'une mémoire dans l'unité de traitement (cf "sortie MUX 1"), la lecture des instructions des mémoires s'effectuant avec un décalage dans le temps, celle de la mémoire M0 avec l'horloge CK0, celle de la mémoire M1 avec CK1 etc...

A la ligne "sortie MUX 1" du chronogramme de la figure 3, il apparaît que le multiplexeur MUX 1 sélectionne une instruction à la fréquence F, l'instruction étant alors décodée par le décodeur d'instructions DI. L'instruction est présente à la sortie pendant la durée δ pour l'alimentation de l'unité de traitement (non représentée). Dans le cas d'une alimentation en basse tension en particulier, comme on l'a vu plus haut, il est néanmoins possible d'utiliser une combinaison de signaux de fréquence F/4 pour construire le signal de commande du multiplexeur de sortie.

On remarquera qu'en l'absence d'une instruction de branchement, l'incrémentation des compteurs de programme PCi pour passer d'une ligne d'instructions à la suivante s'opère classiquement par la boucle d'incrémentation connectée à l'entrée 0 des multiplexeurs mu i.

On va maintenant expliquer le fonctionnement du dispositif de la figure 2 dans le cas de l'exécution du programme représenté à la figure 1C qui contient une instruction de branchement (référencée 4) contenue dans la mémoire M0. Cette instruction : IF (...) GOTO adr renvoie donc à l'adresse de branchement adr contenue dans la mémoire M2. Sur le chronogramme de la figure 3B qui illustre ce fonctionnement, il apparaît que le décodage de cette instruction par le décodeur DI occupe quatre périodes 6 de la fréquence F, par exemple (cf lignes "sortie MUX 1" et M0). Dès l'instruction transférée à la sortie du multiplexeur MUX 1, le décodeur commande l'alimentation de l'unité de traitement avec des codes NOP de "non opération" qui bloquent le fonctionnement de l'unité de traitement pendant toute la durée de l'exécution du branchement indiqué dans l'instruction (cf ligne "sortie MUX 2"), soit 4 périodes de la fréquence F par exemple.

Sur la figure 2, il apparaît que le branchement indiqué dans l'instruction de branchement doit être pris en compte par l'ensemble des compteurs de programme PCi, y compris ceux qui sont associés aux mémoires qui ne contiennent pas cette instruction, pour que l'adresse de branchement puisse être sélectionnée par le multiplexeur MUX 1 dans la ligne d'instructions qui la contient et que les instructions suivantes de la ligne (adr + 1, adr + 2, adr + 3, etc...) puissent être transférées dans l'unité de traitement. C'est l'automate de commande qui, à la réception du signal JMP venu du décodeur, forme et émet alors les signaux d'horloge CKi et INCi convenables. L'automate commande aussi le multiplexeur MUX 1 grâce aux 2 bits LSB qui permettent la sélection de l'entrée du multiplexeur qui correspond à la mémoire contenant l'adresse de branchement.

Ainsi l'automate est-il chargé des fonctions suivantes :
- détermination de la mémoire qui doit être activée en premier (la mémoire M2 dans l'exemple représenté). Il utilise pour cela les bits de poids faible LSB de l'adresse de branchement qui repèrent cette mémoire,
- fourniture des signaux d'horloge adéquats aux mémoires pour activer celle qui doit être activée en premier. Suivant une caractéristique de la présente invention, dans l'exemple représenté, après l'instruction de branchement à l'adresse adr contenue dans la mémoire M2, l'automate force un signal CK2, puis CK3 (et non CK1 puis CK2), pour que la mémoire M2 soit activée la première,
- détermination des adresses à charger dans les compteurs de programme associés aux mémoires. Dans l'exemple représenté, on doit charger l'adresse adr dans les compteurs de programme associés aux mémoires M2 et M3 et l'adresse adr +1 dans les compteurs de programme associés aux mémoires M0 et M1 car les instructions Z et suivantes du programme sont situées à la ligne suivante. Pour ce faire l'adresse doit être incrémentée pour toutes les mémoires Mi dont l'indice i est inférieur à j, Mj étant la mémoire qui doit être activée en premier,
- génération du signal ctr_Mux qui commande le multiplexeur MUX 1 pour que l'instruction de branchement reste disponible pendant quatre périodes δ et puisse fournir l'adresse de branchement aux quatre compteurs de programme, qui chargent cette adresse à des instants différents, et production de quatre codes NOP de "non opération" pour assurer le blocage de l'unité de traitement pendant l'exécution de l'instruction de branchement.

On a représenté à la figure 4B un mode de réalisation de l'automate de commande permettant d'exécuter les fonctions énoncées ci-dessus. Comme cela apparaît à la figure 4B, cet automate est alimenté par le signal JMP de saut fourni par le décodeur d'instructions DI et par les deux bits les moins significatifs LSB 1 et LSB 0 de l'adresse de branchement pour élaborer et délivrer les signaux d'horloge CKi d'activation des mémoires Mi, les signaux d'incrémentation INC0, INC1, INC2 et le signal de commande du multiplexeur MUX 1. Pour ce faire, l'automate comprend un premier circuit combinatoire 1 alimenté par les signaux JMP, LSB 1, LSB 0 et commandant les entrées D de deux bascules bi-flanc 2 et 3 dont les sorties Q alimentent un décodeur 4 délivrant les signaux CKi, un multiplexeur 5 à travers un incrémenteur modulo N (N = 4 dans l'exemple illustré) et un deuxième circuit combinatoire 6 délivrant les signaux INC0, INC1 et INC2. Les sorties Q des bascules sont aussi bouclées sur l'entrée du circuit combinatoire 1 du fait du caractère séquentiel de celui-ci, comme on le verra plus loin.

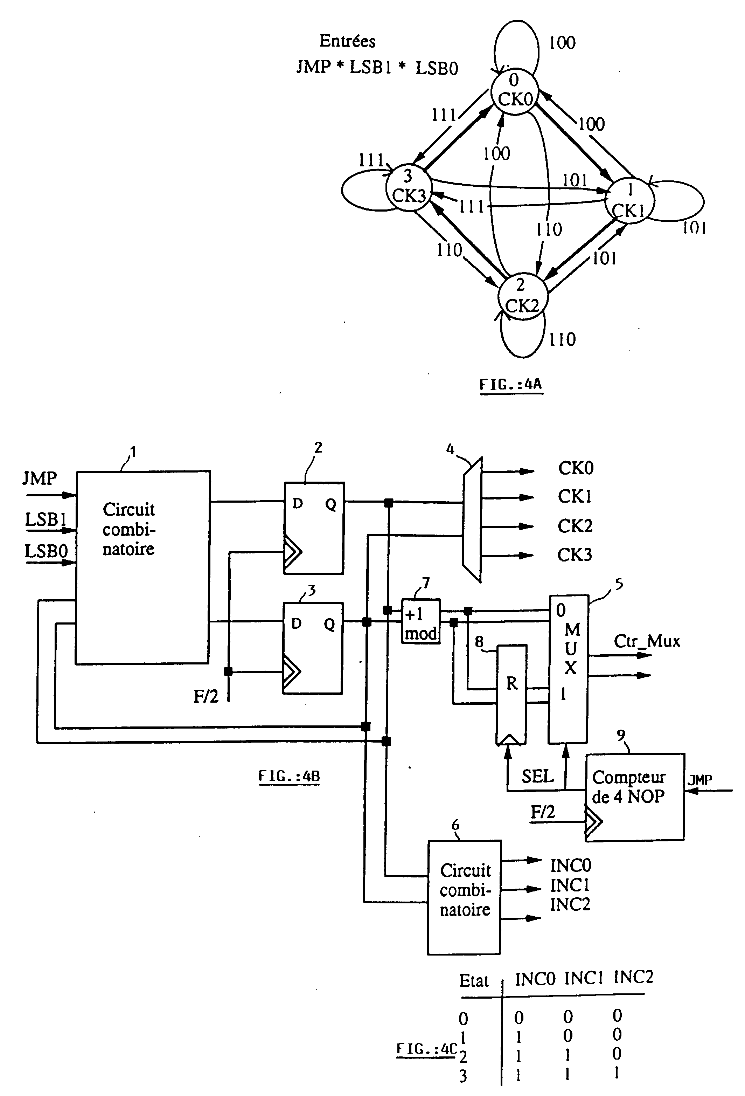

La figure 4A représente un diagramme d'états mis en oeuvre par le circuit combinatoire 1 pour la délivrance des signaux CKi. La figure 4C est une table de vérité mise en oeuvre par le circuit combinatoire 6 pour la délivrance des signaux INC0, INC1 et INC2 en fonction de la valeur décimale 0, 1, 2 ou 3 représentée par les quatre états possibles du couple des sorties Q des deux bascules 2 et 3. La réalisation des circuits combinatoires 1 et 6 à partir des informations contenues dans les figures 4A et 4C est du domaine des activités courantes de l'homme de métier connaissant la logique combinatoire et les circuits du commerce conçus pour sa mise en oeuvre.

Comme cela apparaît sur la figure 4B, les entrées d'horloge des bascules sont activées à la fréquence F/2, les bascules étant bi-flanc. Avec des bascules normales, on utiliserait la fréquence F.

On va maintenant expliquer comment l'ensemble constitué par le circuit combinatoire 1, les bascules 2 et 3 et le décodeur 4 permet de commander l'émission du signal CKi d'activation de la prochaine mémoire qui doit être activée, ou "repartir", en premier. Sur le diagramme d'états de la figure 4A, les flèches en trait fort correspondent à l'exécution d'un programme sans branchement (JMP = 0), les autres à un branchement (JMP = 1). Les triplets de binaires associés à chaque flèche correspondent à JMP∗LSB 1∗LSB 0, les deux derniers désignant alors la mémoire à faire repartir en premier. C'est ainsi qu'il apparaît qu'en l'absence d'instruction de branchement, l'ordre d'activation des mémoires Mi suit répétitivement le cycle M0, M1, M2, M3, M0 etc... En présence d'une instruction de branchement (JMP = 1) ce sont les bits LSB 1 et LSB 0 de l'adresse de branchement qui déterminent la prochaine mémoire à activer. C'est ainsi que, par exemple, si LSB 1 = 1 et LSB 0 = 0 alors que la dernière mémoire activée est la mémoire M3 (CK 3 = 1), le code 10 (= 2 en décimal) associé à l'ensemble des bits LSB 1 et LSB 0 désigne la mémoire M2 et c'est le signal CK 2 qui est émis par le décodeur 4.

La commande du multiplexeur MUX 1 est basée sur "l'état" de l'automate correspondant à l'ensemble des états des deux sorties Q des bascules 2 et 3. Sur la figure 3B, il apparaît que la commande Ctr-Mux correspond à l'état CKj de l'automate, incrémenté d'une unité modulo N, d'où la présence de l'incrémenteur 7 modulo 4 de la figure 4B sur ces sorties Q. Comme on l'a vu plus haut, en cas d'instructions de branchement conditionnel, la sortie du multiplexeur MUX 2 (figure 2) doit être bloquée par des codes NOP pendant la lecture de l'instruction de branchement, soit pendant quatre périodes de la fréquence de travail F. On bloque alors la commande du multiplexeur 5 dans un registre 8 à l'émission du signal JMP, ceci grâce à un compteur de 4 NOP référencé 9 à la figure 4B, commandé à la fréquence F/2. Sur la figure 3B, il apparaît que ce blocage s'opère au code 0. A la fin des quatre périodes, le compteur désactive un signal SEL de blocage. Le multiplexeur sélectionne alors une autre instruction et le signal JMP devient inactif (JMP = 0).

La table de vérité de la figure 4C donne pour chaque "état" de l'automate les valeurs des signaux d'incrémentation INC0, INC1 et INC2 des compteurs de programme associés aux mémoires M0, M1 et M2. En cas d'instruction de branchement, la suite des instructions à lire reprend (dans l'exemple illustré à la figure 3B) à partir de celles contenant l'adresse de branchement adr contenue dans la mémoire M2. Il faut donc lire ensuite l'instruction contenue dans la mémoire M3, sans incrémentation du compteur de programme associé à cette mémoire, puis dans les mémoires M0 et M1, à la ligne suivante, adressées par les compteurs de programme PC0 et PC1 qui doivent donc être incrémentés. Comme on l'a vu plus haut, Mj étant la mémoire qui doit repartir en premier, l'incrémentation porte sur les mémoires Mi dont l'indice i < j. La table de vérité de la figure 4C met en oeuvre cette règle. Pratiquement (voir figure 2), les incrémentations ainsi déterminées sont opérées par des incrémenteurs (blocs "+1") et des multiplexeurs mux 0, mux 1, mux 2 commandés par les signaux INC0, INC1, INC2.

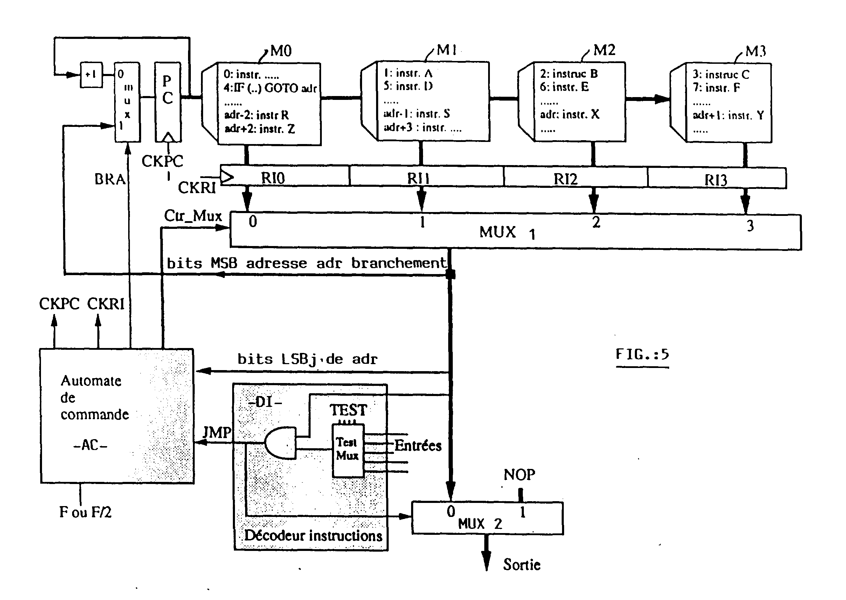

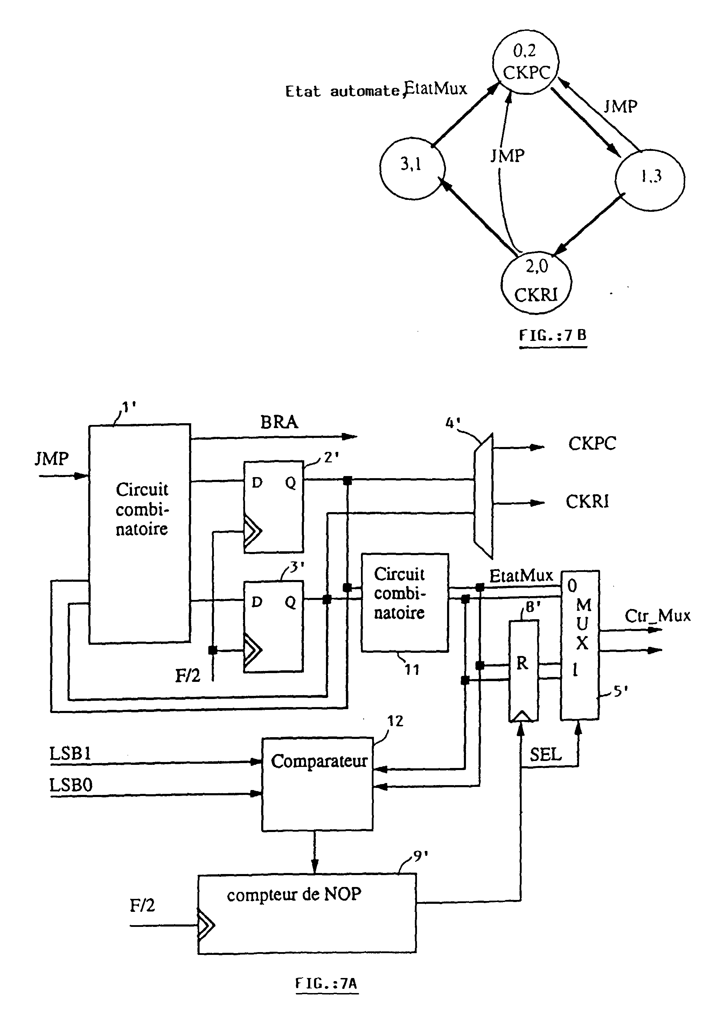

On a représenté schématiquement à la figure 5 un deuxième mode de réalisation du dispositif suivant l'invention, qui se distingue essentiellement de celui des figures 2 à 4 en ce qu'un seul compteur de programme PC adresse simultanément toutes les mémoires M0 à M3. On retrouve dans ce deuxième mode de réalisation le décodeur d'instructions DI et les multiplexeurs MUX 1 et MUX 2 du mode de réalisation de la figure 2. Il comprend en outre un automate de commande AC qui se distingue de celui de la figure 4 et que l'on décrira en plus de détail en liaison avec les figures 7A et 7B. Cet automate commande le compteur de programme PC (signal CKPC) ce dernier étant chargé à travers un multiplexeur mux lui-même commandé par un signal BRA de branchement inconditionnel également fourni par l'automate de commande. Le multiplexeur présente deux entrées, l'une assurant l'entrée éventuelle d'une adresse de branchement et l'autre étant connectée à une boucle d'incrémentation (bloc "+1"). En l'absence d'instruction de branchement, c'est l'entrée 0 du multiplexeur mux alimentée par cette boucle qui est active. En présence d'une commande de branchement (BRA = 1), c'est l'autre entrée qui est activée.

Le dispositif de la figure 5 comprend encore, suivant une caractéristique spécifique à ce mode de réalisation de l'invention, un jeu de registres RIO à RI3 en sortie des mémoires M0 à M3 respectivement, commandés en parallèle par un signal d'horloge CKRI issu de l'automate de commande, ces registres accueillant les instructions présentes dans les diverses lignes des mémoires M0 à M3.

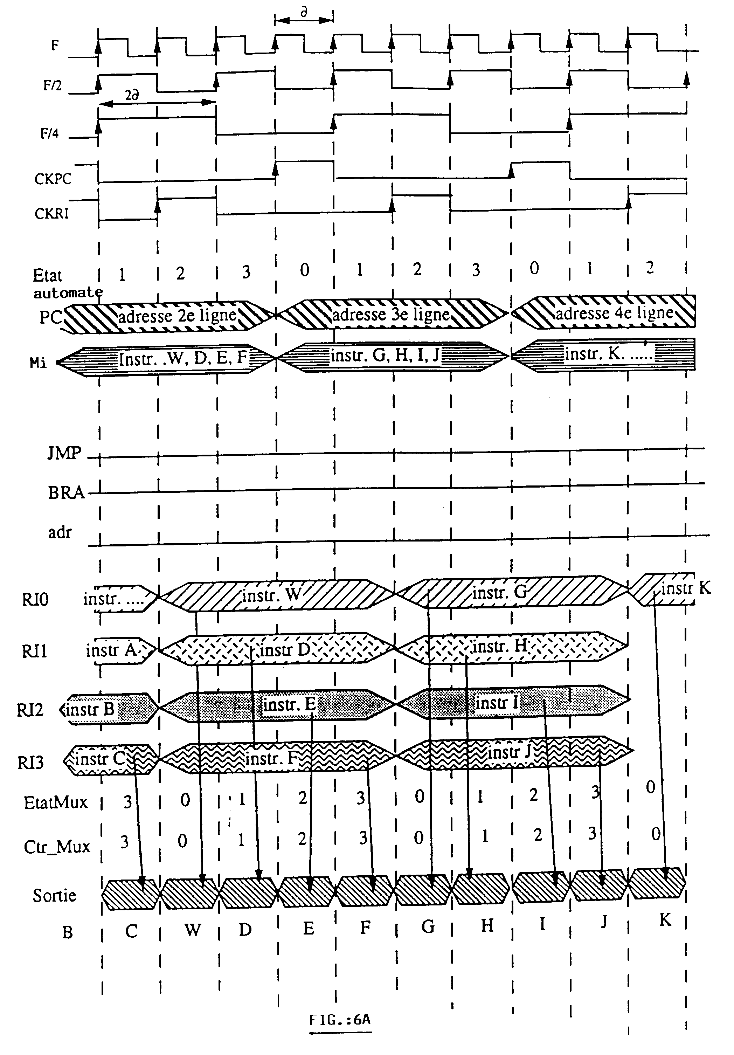

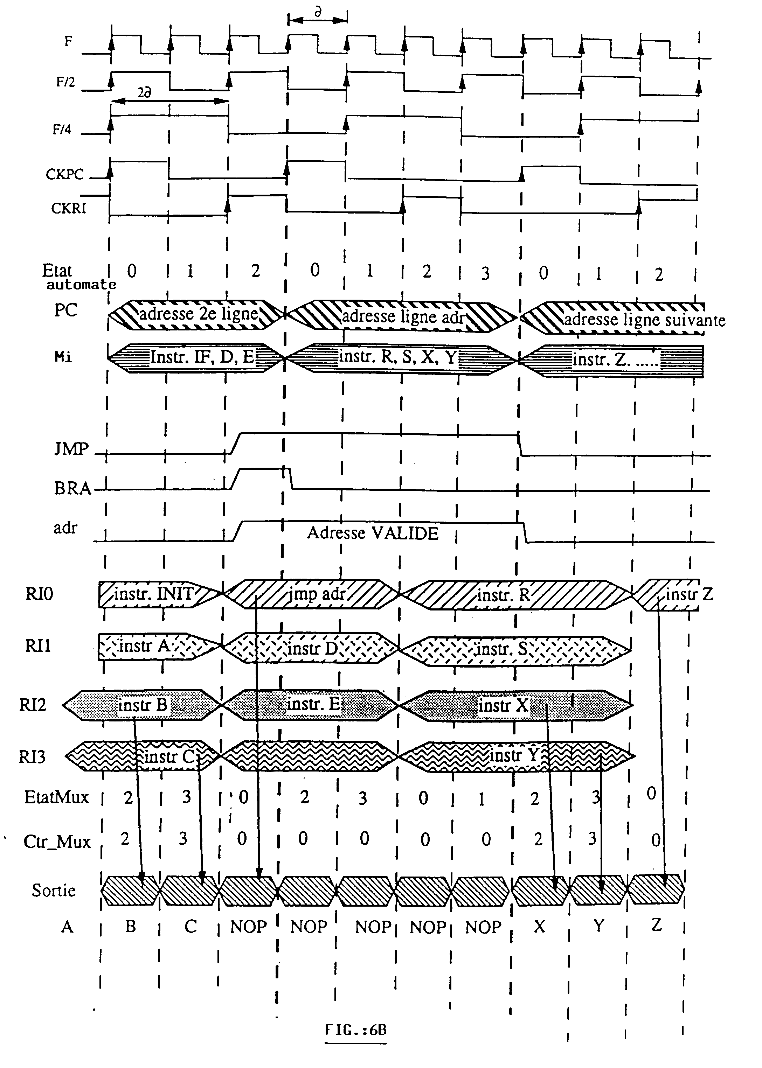

On se réfère maintenant aux chronogrammes des figures 6A et 6B pour décrire le fonctionnement du dispositif en l'absence d'instructions de branchement (figure 6A) et en présence d'une telle instruction (figure 6B). Ces chronogrammes sont organisés pour l'essentiel comme ceux des figures 3A et 3B à ceci près qu'il n'y a plus qu'un seul signal d'horloge CKPC au lieu de quatre (CK0 à CK3) et que les temps d'accès aux instructions en registre RIi remplacent les temps d'accès aux instructions en mémoire M0 à M3.

Aux figures 6A et 6B, il apparaît que les instructions sont chargées dans les registres RIi après deux périodes de la fréquence F. On peut aussi les charger après trois ou quatre périodes de F pour donner plus de temps à la lecture des mémoires. En accroissant ainsi le temps de lecture on accroît cependant aussi le nombre des codes NOP à émettre lors d'un branchement, comme on le verra plus loin en liaison à la figure 6B.

La lecture des instructions en mémoire s'effectue simultanément pour toutes les mémoires M0 à M3. Deux périodes de F plus tard, ces instructions sont chargées en même temps dans les registres RIi. C'est alors que la commande du multiplexeur de sortie MUX 1 permet de sélectionner les instructions les unes après les autres pour les envoyer à la sortie du multiplexeur MUX 1 et, de là, dans l'unité de traitement (non représentée), à travers le multiplexeur MUX 2.

On va décrire l'exécution du programme avec branchement de la figure 1C par le dispositif de la figure 5, à l'aide du chronogramme de la figure 6B et du schéma de l'automate de commande représenté à la figure 7A.

Au passage d'une instruction de branchement conditionnel à la sortie du multiplexeur MUX 1, celle-ci est décodée par le décodeur DI qui fournit alors un signal de saut JMP = 1 à l'automate de commande. On assure alors le branchement en chargeant l'adresse de branchement dans le compteur de programme PC unique. L'automate de commande AC fournit les signaux nécessaires à la gestion du branchement.

Cet automate a plusieurs fonctions :
- fourniture des signaux d'horloge adéquats au compteur de programme PC et aux registres d'instructions RIi pour charger dès que possible l'adresse de branchement, malgré la rupture de séquencement que l'on observe alors. Sur la figure 6B, il apparaît qu'après décodage de l'instruction de saut JMP, l'automate force immédiatement un signal CKPC puis un signal CKRI,
- détermination de la mémoire qui doit repartir en premier (dans l'exemple donné c'est la mémoire M2 qui contient l'adresse adr de branchement). On utilise pour cela, comme dans le mode de réalisation précédent, les bits de poids faible LSBj de l'adresse de branchement qui identifie la mémoire qui doit repartir en premier. Il faut aussi déterminer l'instant de ce redémarrage. Cela nécessite une comparaison entre les bits LSBj et les bits de commande du multiplexeur, comme on l'expliquera dans la suite en liaison avec la figure 7,
- blocage des signaux de commande (Ctr_Mux) du multiplexeur MUX 1 pour que les instructions intermédiaires du programme, entre une instruction de branchement et l'instruction cible placée à l'adresse adr de branchement dans la mémoire qui doit repartir en premier, ne soient pas exécutées et que des codes NOP soient produits en sortie.

On a représenté à la figure 7A une structure possible de l'automate de commande permettant d'exécuter toutes ces fonctions. On retrouve dans cet automate certains éléments de l'automate de la figure 5 et notamment un circuit combinatoire 1' alimentant les entrées D de deux bascules bi-flanc 2' et 3' commandées à la fréquence d'horloge F/2, les sorties Q de ces bascules constituant "l'état de l'automate" qui permet à un décodeur 4' de former les signaux d'horloge CKPC et CKRI. L'automate comprend un deuxième circuit combinatoire 11 sensible à cet "état de l'automate" pour fournir en sortie un "état du multiplexeur" Etat Mux alimentant une entrée 0 d'un multiplexeur 5' délivrant le signal Ctr_Mux de contrôle du multiplexeur MUX 1 de la figure 5.

L'automate comprend encore un comparateur 12, des bits LSB 1 et LSB 0 d'une part et de l'état du multiplexeur d'autre part, pour commander un compteur de NOP 9' excité à la fréquence F/2. La sortie SEL du compteur déclenche à l'instant adéquat l'alimentation de l'entrée 1 du multiplexeur 5' par l'état mis temporairement en mémoire dans un registre 8'.

La figure 7B représente un diagramme d'états mis en oeuvre par le circuit combinatoire 1', les bascules 2', 3' et le décodeur 4'. Les flèches épaisses indiquent l'évolution de l'état de l'automate (les sorties Q des bascules) et de l'état du multiplexeur (la sortie du circuit combinatoire 11) en l'absence d'instructions de saut (JMP = 0) alors que les autres flèches indiquent cette évolution en cas d'instructions de branchement (JMP = 1).

Dès qu'un branchement est décodé par le décodeur DI, le circuit combinatoire 1' active le signal BRA de commande du multiplexeur mux d'adresses du compteur de programme PC. Le signal revient ensuite à 0 (voir ligne BRA, figure 6B) pour le chargement de l'adresse de branchement dans le compteur de programme PC.

La commande Ctr_Mux du multiplexeur MUX 1 est basée sur l'état de l'automate. Sur la figure 6B, il apparaît que la commande Ctr-Mux correspond à l'état de l'automate augmenté de 2 (modulo 4). Ceci résulte du fait que le décalage entre la lecture des instructions et le chargement dans les registres RIi est de 2 périodes de la fréquence de travail F. Le circuit combinatoire 11 réalise cette opération.

Pour bloquer la commande du multiplexeur de sortie, la commande Etat Mux est mémorisée dans le registre 8 à l'activation du signal SEL. Le compteur 9', synchronisé à la fréquence F/2 (dans le cas de l'utilisation de bascules bi-flanc), démarre à l'activation du signal JMP et compte les périodes pendant lesquelles le multiplexeur de sortie doit être bloqué (au code 0 dans l'exemple de la figure 6B). Sur cette figure, il apparaît que 5 codes NOP consécutifs sont nécessaires avant que l'instruction X figurant à l'adresse adr de branchement ne passe en sortie du multiplexeur MUX 1.

Le compteur 9' désactive le signal SEL lorsque le comparateur 12' indique que l'instruction exécutée (l'instruction X) est dans sa phase d'exécution. Pour ce faire, le comparateur compare les bits LSB de l'adresse de branchement, indiquant quelle mémoire doit démarrer en premier (en l'occurrence la mémoire M2 contenant l'instruction X) avec la commande du multiplexeur de sortie (état Mux = 2, figure 6B). Le multiplexeur sélectionne alors l'instruction X et le signal JMP revient à l'état inactif soit JMP = 0.

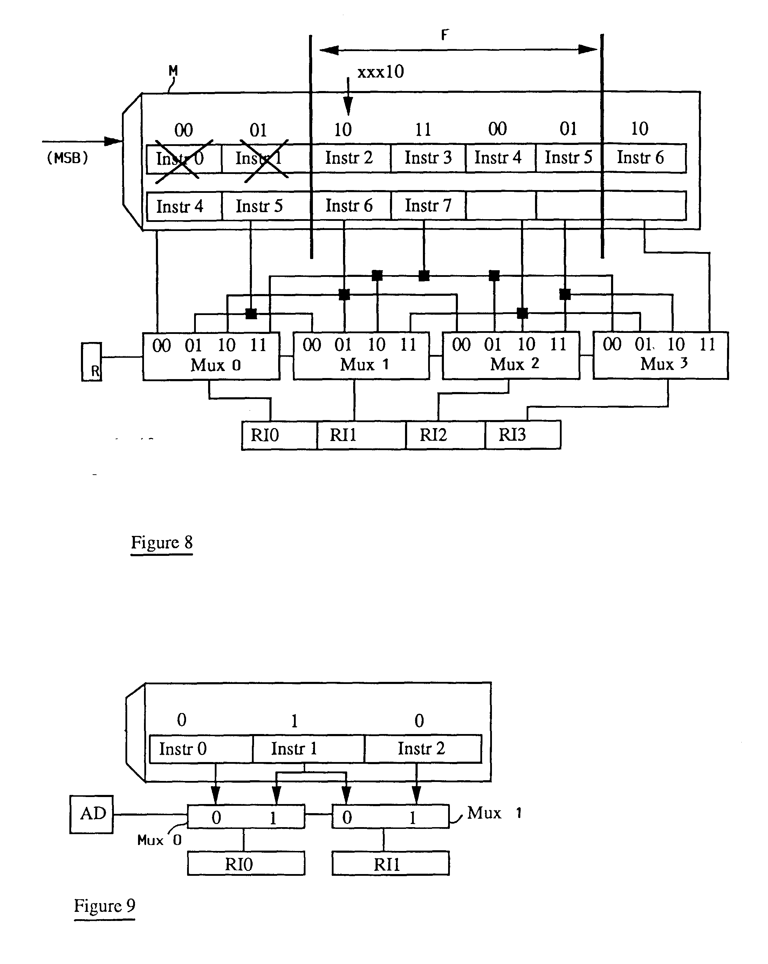

La figure 8 montre une mémoire M, dont les lignes comportent N = (2 x 2ⁿ) - 1 instructions, capable de délivrer 2ⁿ instructions en parallèle. Dans le cas représenté, n est égal à 2 et N vaut 7. Pour sélectionner les 2ⁿ instructions à inscrire dans les registres RIO à RI3, on utilise quatre multiplexeurs Mux0 à Mux3 à quatre entrées. Les entrées du premier multiplexeur Mux0 sont connectées aux quatre premières positions de la ligne mémoire adressée, les entrées du deuxième multiplexeur Mux1 sont connectées aux positions 2 à 5, les entrées du troisième multiplexeur Mux2 sont connectées aux positions 3 à 6, etc. Selon la valeur du code enregistré dans le registre de commande R (le code est constitué par les bits LSB de l'adresse de la première des 2ⁿ instructions), il est possible de sélectionner les 2ⁿ premières instructions d'une ligne ou les instructions aux positions 2 à 2ⁿ + 1 ou celles aux positions 3 à 2ⁿ + 2, etc. On notera que la modification du code de commande des multiplexeurs revient à déplacer une fenêtre F (symbolisée par deux traits épais) dans laquelle se trouvent les instructions à sélectionner. Si, de plus, les instructions sont inscrites dans la mémoire de telle manière que chaque ligne contienne (2 x 2ⁿ) - 1 instructions successives et que les 2ⁿ - 1 premières instructions d'une ligne soient identiques aux dernières instructions de la ligne précédente, le programme d'instructions est toujours accessible dans la fenêtre et ce, quelle que soit la position de cette fenêtre. Dans le cas d'un branchement, les bits LSB de l'adresse de branchement (adresse de l'instruction cible) sont chargés dans le registre de commande, ce qui a pour effet de déplacer la fenêtre de telle manière que l'instruction cible soit la première des 2ⁿ (quatre dans l'exemple considéré) instructions sélectionnées. La figure 8 représente le cas d'un branchement à l'adresse xxx10 (xxx représentant le numéro de la ligne de mémoire et 10 représentant le numéro de la zone de mémoire dans cette ligne). Le code 10 est chargé dans le registre de commande, ayant pour effet de positionner la fenêtre sur les positions 10 à 01 de la mémoire. Les bits MSB (soient xxx) de l'adresse de branchement servent à adresser la ligne voulue de la mémoire. On notera que, dans le cas représenté, les instructions, référencées 0 et 1, aux positions 00 et 01 ne doivent pas être exécutées et ne sont pas sélectionnées.

La figure 9 montre un exemple du dispositif de la figure 8 lorsque n est égal à 1. La mémoire comprend trois instructions par ligne et la fenêtre ne couvre que deux instructions par ligne. Deux multiplexeurs Mux0 et Mux1 seulement, commandés par le code AD, sont nécessaires pour déplacer cette fenêtre sur les deux premières ou les deux dernières positions des lignes de mémoires. Après un branchement à une adresse paire (xxx0) ou impaire (xxx1), AD = 0 ou 1, respectivement.

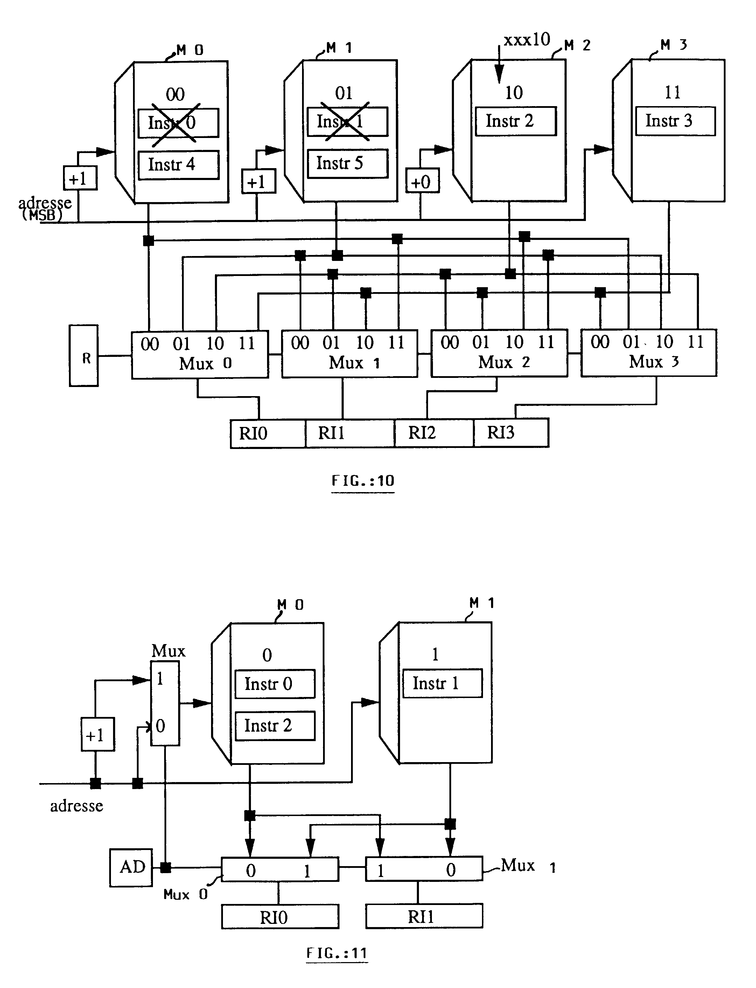

La figure 10 montre un autre exemple de moyens de mémorisation pouvant être utilisés dans le cadre de la présente invention. Ces moyens comprennent 2ⁿ (avec n égal à 2) mémoires M₀ à M₃ séparées et un seul compteur de programme (non représenté). Comme dans l'exemple précédent, quatre multiplexeurs Muxi (i = 0 à 3) à quatre entrées, commandés par un code chargé dans un registre de commande R, permettent la sélection de quatre instructions successives. Lors d'un branchement (à l'adresse xxx10 dans le cas représenté), les multiplexeurs Muxi sont commandés de manière que l'instruction à l'adresse xxx10 soit sélectionnée par le premier multiplexeur Mux0, les autres multiplexeurs sélectionnant les instructions suivantes. Comme l'instruction d'adresse xxx10 se trouve dans la troisième mémoire M₂, les troisième et quatrième instructions se trouvent à la ligne suivante des première et deuxième mémoires. Pour pouvoir sélectionner cette ligne suivante, il est prévu de placer des incrémenteurs "+1" entre le compteur de programme et le décodeur d'adresse (non représenté) de chaque mémoire (sauf la dernière). Ces incrémenteurs sont activés en relation avec le contenu du registre de commande R. Comme précédemment, le registre de commande est chargé avec les bits LSB de l'adresse de branchement.

La figure 11 montre le dispositif de la figure 10 dans le cas où n est égal à 1.

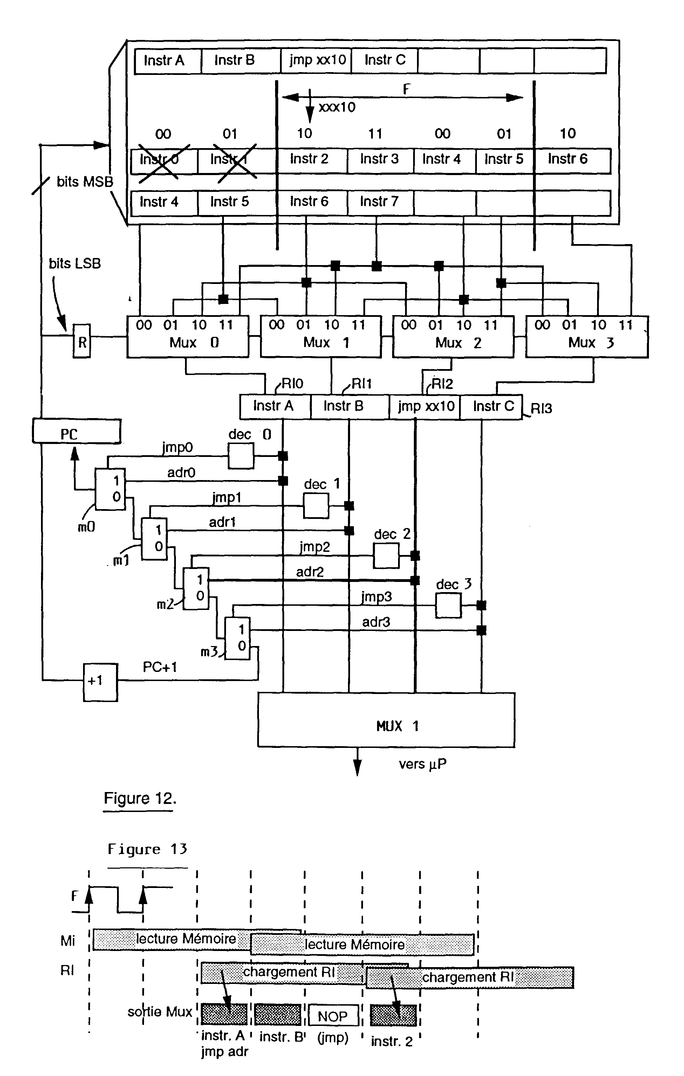

La figure 12 montre un exemple de mécanisme de gestion des branchements avec anticipation. Bien que la partie supérieure de cette figure soit identique à la figure 8, il devra être néanmoins compris que le dispositif de la figure 10 peut être aussi utilisé en lieu et place de celui de la figure 8. Dans l'exemple représenté, une instruction de branchement (jmp xx10) apparaît dans le troisième registre RI2. Le code de cette instruction est décodé par le décodeur dec2 qui commande, à l'aide du signal jmp2, le multiplexeur d'adresse m2 qui lui est associé de manière que ce dernier transmette l'adresse adr2 de branchement au compteur de programme PC de la mémoire. L'agencement des multiplexeurs d'adresse mi est tel qu'une instruction de branchement dans les premières positions des registres RI0 à RI3 sera prioritaire par rapport à une instruction dans une position plus éloignée. Si les registres RI0 à RI3 ne contiennent pas d'instruction de branchement, l'adresse contenue dans le compteur de programme sera incrémentée d'une unité à l'aide de l'incrémenteur "+1".

La figure 13 est un diagramme temporel qui montre comment les instructions sont lues et exécutées dans le cas d'une instruction de branchement située en troisième position. La présence de cette instruction de branchement est détectée et a pour effet d'initier immédiatement la lecture de la mémoire en commençant à l'adresse de branchement. Ainsi sont successivement exécutées une instruction A, une instruction B, l'instruction de branchement (jmp) et l'instruction cible (instr. 2). On notera que la lecture des instructions suivant l'instruction de branchement intervient pendant l'exécution de l'instruction B.

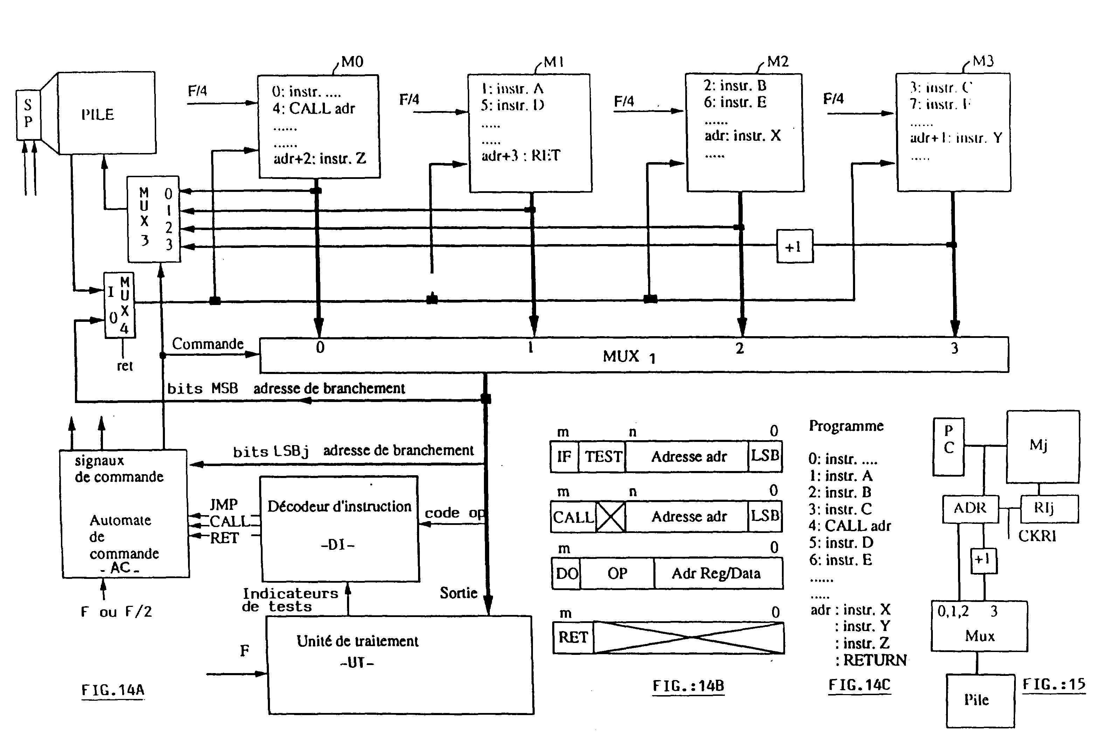

On a représenté schématiquement à la figure 14A un troisième mode de réalisation du dispositif suivant l'invention, conçu pour l'exécution d'un programme (voir figure 14C) comportant des instructions d'appel à des sous-programmes (code : CALL) et de retour (code : RET) dans le programme principal, depuis le sous-programme. Ces instructions d'appel et de retour constituent des cas particuliers des instructions de branchement. Les formats de ces instructions sont donnés figure 14B.

Le dispositif comprend, comme les précédents, des mémoires M0 à M3, un multiplexeur MUX 1, un décodeur d'instructions DI et un automate de commande AC et délivre les instructions du programme à une unité de traitement UT de ces instructions. Suivant l'invention, le dispositif comprend en outre une pile de registres, du type LIFO par exemple, et un pointeur de pile SP classiques, pour le rangement d'adresses provisoires lors du passage à un sous-programme d'instructions X, Y, Z tel que celui représenté à la figure 14C.

Le mécanisme d'exécution d'une instruction d'appel à un sous-programme est semblable à celui d'une instruction de branchement. La seule différence concerne la mémorisation de l'adresse de départ, c'est-à-dire l'adresse courante contenue dans le compteur de programme (cas d'un dispositif à un seul compteur de programme) ou dans un des compteurs de programme (cas d'un dispositif à plusieurs compteurs de programme).

Dans le cas d'un dispositif comptant plusieurs compteurs de programme, du type de celui de la figure 2 par exemple, la commande du multiplexeur de sortie commande également un multiplexeur MUX 3 aiguillant l'adresse de retour dans la mémoire qui contient le code CALL. Dans l'exemple de la figure 14A, on aiguille l'adresse courante du compteur de programme (non représenté) de la mémoire M0, puisque le code d'appel CALL se trouve dans cette mémoire. Lorsque ce code est décodé par le décodeur DI, le compteur de programme de la mémoire M0 n'est pas encore modifié.

Dans le cas d'un dispositif à un seul compteur de programme PC, tel que schématisé à la figure 15, l'adresse contenue dans le compteur de programme est mémorisée dans un registre ADR chargé avec le signal d'horloge CKRI. Cette adresse est donc disponible tout au long de la durée d'exécution des 2ⁿ instructions contenues dans les registres RIi et peut être ainsi chargée dans la pile si l'une des 2ⁿ instructions est une instruction de retour.

Pour l'exécution d'une instruction de retour (code : RET) on applique le même mécanisme de branchement en prenant toutefois l'adresse de retour dans la pile, grâce à une commande adéquate d'un multiplexeur MUX 4 (voir figure 14) commandé par le code RET.

Il apparaît maintenant que la présente invention permet d'atteindre le but annoncé, à savoir exécuter un programme d'instructions avec branchement, distribué entre plusieurs mémoires commandées à une fréquence inférieure à la fréquence de travail globale du dispositif, c'est-à-dire avec des mémoires alimentées en plus basse tension. Le surcoût entraîné par l'utilisation d'une pluralité de mémoires de programme est faible, la taille de chacune pouvant être réduite en proportion de leur nombre.

La présente invention trouve application en particulier dans le dispositif de commande couramment appelé "contrôleur" ou pour mémoriser le programme d'application d'un microprocesseur assurant un traitement des instructions en "pipeline" (chevauchement) par exemple.

Bien entendu l'invention n'est pas limitée aux modes de réalisation décrits et représentés qui n'ont été donnés qu'à titre d'exemple. Ainsi, on peut simplifier la gestion des branchements en n'autorisant que certaines possibilités de branchement. Par exemple, les instructions de branchement ne pourraient être autorisées que dans un nombre restreint de mémoires (par exemple dans une seule mémoire). L'insertion de codes NOP ou un réagencement du programme permet de surmonter cette contrainte. De même, les adresses de branchement pourraient n'être possibles que dans un nombre restreint de mémoires, par exemple une seule. Le programmeur pourrait être aussi contraint, en cas de branchement dans une mémoire, à insérer à la suite 2ⁿ instructions de branchement. Les branchements pourraient n'être autorisés qu'à des adresses contenues dans la même mémoire. L'instruction précédant un branchement dans le programme pourrait être placée dans le code exécuté à la suite du branchement, en bloquant le multiplexeur de sortie un peu plus tard, pour diminuer le nombre des codes NOP. Toutes ces contraintes pourraient être imposées séparément ou en combinaison.

Suivant une autre variante, le jeu d'instructions disponible pour le programmeur comprend l'instruction de saut conditionnel : IF (...) SKIP next instruction (SI(...) SAUTER instruction suivante). Cette instruction permet d'éviter un branchement en substituant un code NOP à l'instruction suivante. Avec le dispositif de la figure 5, si le branchement doit se faire à une instruction déjà mise dans l'un des 2ⁿ registres RIi, on peut simplement utiliser les bits LSB de l'adresse pour déterminer la commande du multiplexeur de sortie qui assure la sortie de cette instruction, ce qui permet de limiter le nombre des codes NOP émis, et donc de ménager la vitesse de traitement des instructions du programme.

On notera que le dispositif de l'invention peut être avantageusement utilisé en association avec une mémoire "cache" d'un microprocesseur. Ces mémoires "cache" sont des mémoires à accès rapide, faisant généralement partie du même circuit intégré que le microprocesseur et contenant des instructions chargées à partir d'une mémoire principale de plus grande capacité, plus lente d'accès et placée en dehors du circuit. Par une gestion judicieuse des échanges entre la mémoire principale et la mémoire "cache", il est possible de charger cette dernière avec les instructions les plus souvent utilisées. Le microprocesseur est alors peu pénalisé par le long temps d'accès de la mémoire principale.

## Revendications

1. Dispositif d'exécution d'un programme compose d'instructions, comprenant des premiers moyens de stockage (Mi) du programme aptes à délivrer en un cycle mémoire 2ⁿ instructions en parallèle, une unité de traitement (UT) des instructions et des deuxièmes moyens pour fournir des instructions successives à l'unité de traitement, caractérisé en ce que lesdits deuxièmes moyens comprennent une unité de gestion (AC,DI) sensible à une instruction de branchement appartenant auxdites 2ⁿ instructions délivrées par lesdits premiers moyens (Mi) et capable d'activer lesdits premiers moyens de manière que l'instruction cible désignée par ladite instruction de branchement soit la première des 2ⁿ instructions suivantes délivrées par lesdits premiers moyens.

2. Dispositif selon la revendication 1, tel que lesdits premiers moyens comprennent au moins 2ⁿ mémoires (Mi) activées en séquence à l'intérieur d'un cycle mémoire à partir de signaux d'horloge fournis par ladite unité de gestion (AC,DI) et en ce que ladite unité de gestion (AC,DI) modifie ladite séquence d'activation en réponse à une instruction de branchement de manière que la première mémoire activée soit celle contenant ladite instruction cible.

3. Dispositif selon la revendication 1, tel que lesdites 2ⁿ instructions sont lues simultanément et en parallèle dans lesdits premiers moyens de stockage (Mi) et en ce que lesdits deuxièmes moyens (AC,DI) fournissent l'adresse de la première desdites 2ⁿ instructions et en ce qu'il est prévu des troisièmes moyens de sélection (MUX 1, MUX 2;Mux i) pour sélectionner les 2ⁿ instructions suivantes en l'absence d'instruction de branchement et pour sélectionner 2ⁿ instructions successives commençant par ladite instruction cible en présence d'une instruction de branchement.

4. Dispositif selon la revendication 3, tel que lesdits premiers moyens de stockage comprennent 2ⁿ mémoires (Mi) séparées, munies chacune d'un décodeur d'adresse, et un compteur de programme dont la sortie est reliée, par l'intermédiaire d'un circuit incrémenteur, auxdits décodeurs d'adresses des 2ⁿ - 1 premières mémoires (M₀,M₁,M₂) et directement à la dernière mémoire (M₃), en ce que ladite unité de gestion fournit audit compteur de programme le code de la ligne contenant la première desdites 2ⁿ instructions ainsi qu'un signal d'activation desdits circuits incrémenteurs des mémoires situées avant la mémoire contenant ladite première instruction.

5. Dispositif selon la revendication 4, tel que lesdits troisièmes moyens de sélection sont constitués par 2ⁿ multiplexeurs (Mux i) à 2ⁿ entrées commandés par le code, indiquant la mémoire de la première desdites 2ⁿ instructions à sélectionner, fourni par ladite unité de gestion.

6. Dispositif selon la revendication 3, tel que lesdits premiers moyens de stockage comprennent une mémoire unique (M) dont les lignes contiennent 2ⁿ instructions successives, les 2ⁿ⁻¹ dernières instructions d'une ligne étant identiques aux 2ⁿ⁻¹ premières instructions de la ligne suivante et en ce que lesdits troisièmes moyens de sélection (Mux i) sélectionnent les 2ⁿ instructions d'une fenêtre (F) dont la position est déterminée par l'adresse de la première desdits 2ⁿ instructions fournie par ladite unité de gestion.

7. Dispositif selon la revendication 6, tel que lesdits troisièmes moyens de sélection sont constitués par 2ⁿ multiplexeurs (Mux i) à 2ⁿ entrées commandés par le code de l'adresse de ladite première desdites 2ⁿ instructions.

8. Dispositif selon la revendication 1, tel que ladite unité de gestion (AC,DI) comprend un circuit multiplexeur chargé par lesdits premiers moyens de stockage (Mi) et adapté à fournir successivement lesdites 2ⁿ instructions à ladite unité de traitement (UT), au moins un décodeur d'instruction (DI) délivrant un signal de branchement en réponse à une instruction de branchement fourni par ledit circuit multiplexeur et un automate de commande (AC) qui, en réponse audit signal de branchement, active lesdits premiers moyens (Mi) et bloque ladite unité de traitement (UT) jusqu'à ce que ladite instruction cible soit disponible dans ledit circuit multiplexeur.

9. Dispositif selon la revendication 8, tel que ladite unité de gestion comprend 2ⁿ décodeurs (dec i fig 12) en parallèle et 2ⁿ multiplexeurs (mi fig 12) commandés par lesdits 2ⁿ décodeurs et agencés de manière à délivrer l'adresse de branchement de la première d'une pluralité d'instructions de branchement chargées dans ledit circuit multiplexeur.

10. Dispositif selon la revendication 1, tel que lesdits premiers moyens constituent une mémoire cache de ladite unité de traitement.

## Patentansprüche

1. Vorrichtung zum Ausführen eines aus Befehlen zusammengesetzten Programms mit ersten Mitteln zum Speichern (Mi) des Programms, die in der Lage sind, in einem Speicherzyklus 2ⁿ Befehle parallel zueinander auszugeben, einer Verarbeitungseinheit (UT) zum Verarbeiten der Befehle und zweiten Mitteln zum Zuführen aufeinanderfolgender Befehle zu der Verarbeitungseinheit, dadurch gekennzeichnet, daß die zweiten Mittel eine Betriebssteuereinheit (AC, DI) aufweisen, die auf einen Verzweigungsbefehl, welcher zu den von den ersten Mitteln (Mi) ausgegebenen 2ⁿ Befehlen gehört, anspricht und in der Lage ist, die ersten Mittel so zu aktivieren, daß der durch den Verzweigungsbefehl bezeichnete Zielbefehl der erste der von den ersten Mitteln ausgegebenen aufeinanderfolgenden 2ⁿ Befehlen ist.

2. Vorrichtung nach Anspruch 1, bei der die ersten Mittel mindestens 2ⁿ Speicher (Mi) aufweisen, die in Folge innerhalb eines Speicherzyklus ausgehend von von der Betriebssteuereinheit (AC, DI) gelieferten Taktsignalen in Folge aktiviert werden, und bei der die Betriebssteuereinheit (AC, DI) die Aktivierungsfolge in Abhängigkeit von einem Verzweigungsbefehl so modifiziert, daß der erste aktivierte Speicher derjenige ist, der den Zielbefehl enthält.

3. Vorrichtung nach Anspruch 1, bei der die 2ⁿ Befehle gleichzeitig und parallel zueinander in den ersten Mitteln zum Speichern (Mi) gelesen werden und bei der die zweiten Mittel (AC, DI) die Adresse des ersten der 2ⁿ Befehle liefern und bei der dritte Mittel zum Auswählen (MUX 1, MUX2; Mux i) vorgesehen sind, um bei Fehlen eines Verzweigungsbefehls die 2ⁿ folgenden Befehle auszuwählen und bei Vorhandensein eines Verzweigungsbefehls 2ⁿ aufeinanderfolgende Befehle, beginnend mit dem Zielbefehl, auszuwählen.

4. Vorrichtung nach Anspruch 3, bei der die ersten Mittel zum Speichern 2ⁿ getrennte Speicher (Mi), die jeweils mit einem Adressendecoder versehen sind, sowie einen Programmzähler aufweisen, dessen Ausgang über eine Taktschaltung mit dem Adressendecoder der 2ⁿ - 1 ersten Speicher (M₀, M₁, M₂) und unmittelbar mit dem letzten Speicher (M₃) verbunden ist, und bei der die Betriebssteuereinheit an den Programmzähler den Zeilencode, der den ersten der 2ⁿ Befehle enthält, sowie ein Signal zur Aktivierung der Taktschaltungen der Speicher, die vor dem den ersten Befehl enthaltenden Speicher angeordnet sind, abgibt.

5. Vorrichtung nach Anspruch 4, bei der die dritten Mittel zum Auswählen bestehen aus 2ⁿ Multiplexern (Mux i) mit 2ⁿ Eingängen, die von dem Code gesteuert werden, der den auszuwählenden Speicher des ersten der 2ⁿ Befehle anzeigt, welcher von der Betriebssteuereinheit geliefert wird.

6. Vorrichtung nach Anspruch 3, bei der die ersten Mittel zum Speichern einen einzigen Speicher (M) aufweisen, dessen Zeilen 2ⁿ aufeinanderfolgende Befehle enthalten, wobei die 2ⁿ - 1 letzten Befehle einer Zeile identisch sind mit den 2ⁿ - 1 ersten Befehlen der folgenden Zeile, und bei der die dritten Mittel zum Auswählen (Mux i) die 2ⁿ Befehle eines Fensters (F) auswählen, dessen Lage durch die Adresse des von der Betriebssteuereiheit gelieferten ersten Befehls der 2ⁿ Befehle bestimmt wird.

7. Vorrichtung nach Anspruch 6, bei der die dritten Mittel zum Auswählen gebildet werden von zwei 2ⁿ Multiplexern (Mux i) mit 2ⁿ Eingängen, die von dem Code der Adresse des ersten Befehls der 2ⁿ Befehle gesteuert werden.

8. Vorrichtung nach Anspruch 1, bei der die Betriebssteuereinheit (AC, DI) aufweist: eine Multiplexer-Schaltung, die von den ersten Mitteln zum Speichern (Mi) gespeist wird und in der Lage ist, die 2ⁿ Befehle aufeinanderfolgend an die Verarbeitungseinheit (UT) abzugeben, mindestens einen Befehlsdecoder (DI), der ein Verzweigungssignal in Abhängigkeit von einem durch die Multiplexer-Schaltung gelieferten Verzweigungsbefehl abgibt, und einen Steuerungsautomaten (AC), der in Abhängigkeit von dem Verzweigungssignal die ersten Mittel (Mi) aktiviert und die Verarbeitungseinheit (UT) sperrt, bis der Zielbefehl in der Multiplexer-Schaltung zur Verfügung steht.

9. Vorrichtung nach Anspruch 8, bei der die Betriebssteuereinheit 2ⁿ parallel geschaltete Decoder (dec i, Fig. 12) und 2ⁿ Multiplexer (mi, Fig. 12) aufweist, die von den 2ⁿ Decodern gesteuert und so betrieben werden, daß sie die Verzweigungsadresse des ersten einer Vielzahl von in die Multiplexer-Schaltung eingegebenen Verzweigungsbefehlen abgibt.

10. Vorrichtung nach Anspruch 1, bei der die ersten Mittel einen Cache-Speicher der Verarbeitungseinheit bilden.

## Claims

1. A device for executing a program of instructions, comprising first means (Mi) of storing the program which are able, in one memory cycle, to deliver 2ⁿ instructions in parallel, a unit (UT) for processing the instructions and second means for supplying successive instructions to the processing unit, charactrized in that said second means comprise a management unit (AC, Dl) sensitive to a jump instruction belonging to said 2ⁿ instructions delivered by said first means (Mi), and capable of activating said first means so that the target instruction designated by said jump instruction is the first of the following 2ⁿ instructions delivered by said first means.

2. The device as claimed in claim 1, wherein said first means comprise at least 2ⁿ memories (Mi) activated in sequence within a memory cycle from clock signals supplied by said management unit (AC, Dl), and in that said management unit (AC, Dl)alters said activation sequence in response to a jump instruction so that the first memory activated is that containing said target instruction.

3. The device as claimed in claim 1, wherein said 2ⁿ instructions are read simultaneously and in parallel in said first storage means (Mi), and in that said second means (AC, Dl) supply the address of the first of said 2ⁿ instructions and in that third selection means (MUX 1, MUX 2, Mux i) are provided for selecting the 2ⁿ following instructions in the absence of a jump instruction and for selecting 2ⁿ successive instructions commencing with said target instruction in the presence of a jump instruction.

4. The device as claimed in claim 3, wherein said first storage means comprise 2ⁿ separate memories each equipped with an address decoder, and a program counter the output of which is linked, via an incrementer circuit, to said address decoders of the 2ⁿ - 1 first memories (M₀, M₁, M₂) and directly to the last memory (M₃), wherein said management unit supplies said program counter with the code of the line containing the first of said 2ⁿ instructions as well as a signal for activation of said circuits incrementing the memories situated ahead of the memory containing first said instruction.

5. The device as claimed in claim 4, wherein said third selection means consist of 2ⁿ multiplexers (Mux i) with 2ⁿ inputs controled by the code, indicating the memory of the first of said 2ⁿ instructions to be selected, supplied by said management unit.

6. The device as claimed in claim 3, wherein said first storage means comprise a single memory (M) the rows of which contain 2ⁿ successive instructions, the last 2ⁿ⁻¹ instructions of a row being identical to the first 2ⁿ⁻¹ instructions of the following row, and wherein said third selection means (Mux i) select the 2ⁿ instructions from a window (F) the position of which is determined by the address of the first of said 2ⁿ instructions supplied by said management unit.

7. The device as claimed in claim 6, wherein said third selection means consist of 2ⁿ multiplexers (Mux i) with 2ⁿ inputs controled by the code of the address of said first of said 2ⁿ instructions.

8. The device as claimed in claim 1, wherein said management unit (AC, Dl) comprises a multiplexer circuit loaded by said first storage means (Mi) and able to supply said 2ⁿ instructions successively to said processing unit (UT), at least one instruction decoder (DI) delivering a jump signal in response to a jump instruction supplied by said multiplexer circuit and a control automaton (AC) which, in response to said jump signal, activates said first means (Mi) and blocks said processing unit (UT) until said target instruction is available in said multiplexer circuit.

9. The device as claimed in claim 8, wherein said management unit comprises 2ⁿ decoders (dec i fig 12) in parallel and 2ⁿ multiplexers (mi fig 12) controled by said 2ⁿ decoders and arranged in such a way as to deliver the jump address of the first of a plurality of jump instructions loaded into said multiplexer circuit.

10. The device as claimed in claim 1, wherein said first means constitute a cache memory of said processing unit.
